Europäisches Patentamt

European Patent Office

Office européen des brevets

(11) Publication number: **0 130 954**
A1

(12) # EUROPEAN PATENT APPLICATION

(21) Application number: 84850202.7

(22) Date of filing: 25.06.84

(51) Int. Cl.⁴: **B 65 G 33/30**

(30) Priority: 30.06.83 SE 8303745

(71) Applicant: AB Siwerteil, P.O Box 66, S-267 00 BJUV (SE)

(43) Date of publication of application: 09.01.85
Bulletin 85/2

(72) Inventor: Hägg, Bo Allan, Korngatan 10,
S-262 00 Ängelholm (SE)

(84) Designated Contracting States: BE CH DE FR GB IT LI
NL SE

(74) Representative: Wallin, Bo-Göran et al, AWAPATENT AB
Box 5117, S-200 71 Malmö (SE)

(54) **Screw conveyor for explosive granular material.**

(57) A screw conveyor for explosive granular material has an interruption (19) on its screw vane or vanes (17, 18) at a distance from the entrance end (11) of said screw conveyor, such that the granular material is conveyed in the form of a column through the housing (10) within the screw conveyor portion (19) without screw vane or vanes. The column functions as a safety plug limiting the tendency of the conveyed granular material to be flung out through the entrance end of the conveyor in the event of an explosion within the screw conveyor. The interruption (19) of said screw vane or vanes (17, 18) has a length which is from 0.5 to 3 times the screw diameter and begins at a distance of from 1 to 4 times the screw diameter from the entrance end (11).

## SCREW CONVEYOR FOR EXPLOSIVE GRANULAR MATERIAL

During transport of explosive granular material, i.e. a material tending to cause dust explosions, such as sulphur and grain, explosions may sometimes occur in the conveyors employed. The present invention relates to a screw conveyor for conveying explosive material, said screw conveyor comprising a conveying screw (having at least one screw vane) and a housing surrounding said conveying screw and having an entrance end and a discharge end, said screw and said housing being rotatable relative to one another for conveying material from the entrance end to the discharge end. In screw conveyors of this type, it has been found difficult to reduce the damaging effects of an explosion in the explosive material conveyed by means of the screw conveyor, and for this reason conveyor types other than screw conveyors have frequently been chosen. Alternatively, use has been made of screw conveyors having a very low conveying capacity, thereby to reduce the damaging effects. One damaging effect of an explosion in the housing of the screw conveyor is that the material below the point of the explosion is frequently flung out through the entrance end, and this may result in personnel injuries because the operators frequently must stand close to the entrance end of the screw conveyor.

One object of the present invention therefore is to provide a screw conveyor for conveying explosive granular material, in which conveyor the risk of injuries to the operators because of an explosion in the screw conveyor has been minimised. Another object of this invention is to provide a screw conveyor that can operate with higher capacity than is normally the case during transport of explosive granular material.

These and other objects that will appear from the following can be achieved if a screw conveyor of the type referred to by way of introduction is so designed that its screw vane or vanes are made discontinuous and have an interruption near but at a distance from the entrance end of the conveyor, which interruption corresponds to a distance of 0.5-3 screw diameters along the housing. In this manner, the granular material will be conveyed in the form of a column through a portion of the housing where the screw vane or vanes are missing. This column will function as a safety plug limiting the tendency of the conveyed granular material to be flung out through the entrance end of the screw conveyor in the event of an explosion within the screw conveyor. The interruption of the screw vane or vanes preferably starts at a distance of from 1 to 4 times the screw diameter from the entrance end. It should be noted that conventional screw diameters are from 200 to 1200 mm.

If the screw conveyor is very long, it may preferably have more than one interruption on the screw vane or vanes, said interruptions being provided at different distances from the entrance end of the screw conveyor, such that the screw conveyor is divided into different portions mutually spaced apart by means of a column or safety plug of the granular material.

In an especially advantageous embodiment of the invention, the screw axis is made to extend from one end of the screw conveyor to the other, such that the screw portions below the interruption or interruptions can be operated by the same motor as the remaining parts of the screw conveyor.

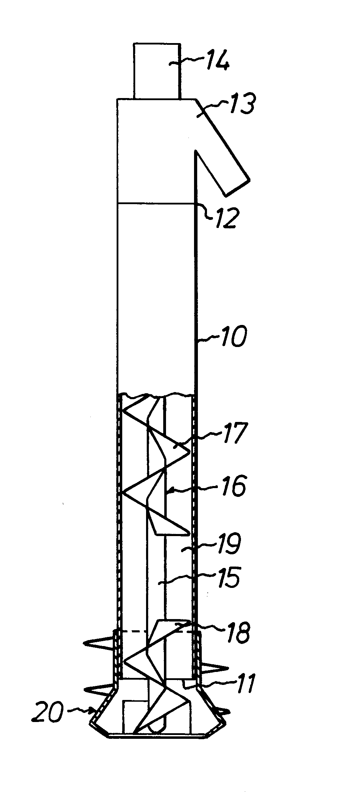

An embodiment of a screw conveyor according to the invention will be described in more detail below, reference being had to the accompanying drawing which schematically illustrates the screw conveyor partly in longitudinal section.

The screw conveyor is provided in conventional manner with a housing 10 extending between an entrance end 11 and a discharge end 12. At the entrance end, there is a transition housing 13 transferring the material to a following conveyor. The upper end of the screw conveyor is provided with a drive motor 14 operating a shaft 15 of the screw 16 of the screw conveyor. In the embodiment illustrated, the vane of the screw 16 is divided into an upper portion 17 and a lower portion 18, such that an interruption 19 is formed between these two portions 17, 18. The length of the interruption 19 preferably is from 0.5 to 3 times the screw diameter, and the interruption preferably begins at a distance of from 1 to 4 times the screw diameter from the entrance end 11.

In the embodiment illustrated, the lower screw portion 18 projects a given distance from the entrance end 11 of the housing 10, and this projecting portion is surrounded by a feeder 20 which, in the embodiment illustrated, is connected to and rotates with the shaft 15 of the screw 16. The feeder may be designed in accordance with what is disclosed in Swedish Patent 343,818. Alternatively, the feeder may be designed such that it rotates independently of the screw 16 and its shaft 15, and in the opposite direction, in which case a separate drive motor preferably is used. An example of such a feeder is disclosed in Swedish Patent 322,161.

During use of the screw conveyor according to the invention, it has been found that the granular material will be pressed upwards by the screw portion 18 through the interruption 19 in the form of an upwardly moving plug rotating within the housing 10. After the interruption 19, the material continues upwards along the screw portion 17 in conventional manner. The material within the rotating plug is slightly compacted as compared to the state of the material in the screw conveyor portion 17, which means that an explosion which occurs above the plug of conveyed material in the interruption 19 can cause no excessive expulsion of material through the entrance end 11 of the screw housing. In any case, the damaging effects will be reduced considerably in that any material expelled in this manner will have a far lower velocity.

## CLAIMS

1. A screw conveyor for conveying explosive granular material, comprising a conveying screw (16) having at least one screw vane (17, 18), and a housing enclosing said conveying screw and having an entrance end (11) and a discharge end (12), said screw (16) and said housing (10) being rotatable relative to one another for conveying material from the entrance end to the discharge end, c h a r a c t e r i s e d in that the screw vane or vanes (16, 17) of said screw conveyor (16) are discontinuous and have an interruption near but at a distance from the entrance end (11) of said conveyor, said interruption (19) corresponding to a distance which is from 0.5 to 3 times the screw diameter along said housing (10).

2. A screw conveyor as claimed in claim 1, c h a - r a c t e r i s e d in that the interruption (19) of the screw vane or vanes (17, 18) begins at a distance which is from 1 to 4 times the screw diameter from the entrance end (11) of said housing (10).

3. A screw conveyor as claimed in claim 1 or 2, c h a r a c t e r i s e d in that it has more than one interruption (19) on said screw vane or vanes (17, 18), said interruptions being provided at different distances from the entrance end (11) of the screw conveyor.

4. Use of a screw conveyor comprising a conveying screw (16) having at least one screw vane (17, 18) and a housing enclosing said conveying screw and having an entrance end (11) and a discharge end (12), said screw (16) and said housing (10) being rotatable relative to one another for conveying material from the entrance end to the discharge end, and said screw vane or vanes (16, 17) of said screw being discontinuous and having an

6 0130954

interruption near but at a distance from the entrance end (11) of said conveyor, said interruption (19) corresponding to a distance which is from 0.5 to 3 times the screw diameter along said housing (10), for conveying explosive granular material.

5. Use as claimed in claim 4, c h a r a c t e r i s e d  in that the interruptions (19) of said screw vane or vanes (17, 18) begin at a distance of from 1 to 4 times the screw diameter from the entrance end (11) of the housing (10).

6. Use as claimed in claim 4 or 5, c h a r a c - t e r i s e d  in that the screw conveyor has more than one interruption (19) on said· screw vane or vanes (17, 18), said interruptions being provided at different distances from the entrance end (11) of the screw conveyor.

**European Patent Office**

**EUROPEAN SEARCH REPORT**

Application number

| | DOCUMENTS CONSIDERED TO BE RELEVANT | | EP 84850202.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y<br>A | FR - A - 2 297 791 (MC DOUGALL)<br> * Fig. 1,3 *<br><br>-- | 1,4<br>3,6 | B 65 G 33/30 |
| Y<br>A | GB - A - 2 092 086 (WESTERN MACHI-NERY)<br> * Fig. 1 *<br><br>---- | 1,4<br>2,5 | |

**TECHNICAL FIELDS SEARCHED (Int. Cl. ³)**

B 65 G 33/00
F 42 B 33/00

The present search report has been drawn up for all claims

| Place of search | Date of completion of the search | Examiner |
|---|---|---|
| VIENNA | 01-10-1984 | BAUMGARTNER |